# EUROPEAN PATENT SPECIFICATION

(11) **EP 4 334 615 B1**
(45) Date of publication and mention of the grant of the patent: **02.04.2025**
(21) Application number: 22723203.0
(22) Date of filing: 05.05.2022
(51) Int. Cl.: F16L 1/26

(54) **APPARATUS AND METHOD FOR COUPLING PIPE SECTIONS IN A BODY OF WATER AND JUNCTION SYSTEM FOR JOINING PIPE SECTIONS IN THE BODY OF WATER**
VORRICHTUNG UND VERFAHREN ZUM VERBINDEN VON ROHRABSCHNITTEN IN EINEM GEWÄSSER UND VERBINDUNGSSYSTEM ZUM VERBINDEN VON ROHRABSCHNITTEN IM GEWÄSSER
APPAREIL ET PROCÉDÉ POUR ACCOUPLER DES SECTIONS DE TUBE DANS UNE MASSE D'EAU ET SYSTÈME DE JONCTION POUR RELIER DES SECTIONS DE TUBE DANS LA MASSE D'EAU

(30) Priority: 07.05.2021 IT 202100011795
(43) Date of publication of application: 13.03.2024
(73) Proprietor: Saipem S.p.A., 20138 Milano (IT)
(72) Inventor: GIRELLO, Enrico, 20138 Milano (IT); BRUNO, Diego, 20138 Milano (IT); LAZZARIN, Diego, 20138 Milano (IT)
(74) Representative: Studio Torta S.p.A.
(86) International application number: PCT/IB2022/054154
(87) International publication number: WO 2022/234505

(56) References cited:
- EP-A2- 0 146 316
- DE-A1- 3 726 083
- GB-A- 2 027 157

## Description

### Technical Field of the Invention

The present invention relates to an apparatus and a method for coupling pipe sections in a body of water.

The present invention further relates to a junction system to join pipe sections in the body of water.

### State of the Art

In particular, the present invention relates to an apparatus for coupling pipe sections, so as to remotely reconfigure underwater structures originally designed for connections performed by divers.

In the oil and gas sector, recent technological developments in underwater infrastructures suitable for operating at high depths and the strong interest of oil companies have facilitated the spread of underwater facilities for the extraction, production or transport of hydrocarbons. Such underwater facilities can be located in shallow waters or very deep waters and generally comprise one or more pipelines for the transport of hydrocarbons or fluids employed in hydrocarbon extraction operations.

In general, for the purposes of the present invention the term "pipeline" means a pipeline, which, in use, lies on the bed of a body of water or in the vicinity of the bed of the body of water and is intended to convey gases and/or liquids, in particular hydrocarbons. A pipeline of the type identified above can extend for hundreds of kilometres and is composed of pipe sections joined to each other.

In the steps of installing and maintaining said underwater pipelines, there is currently a need to join two adjacent pipeline portions to each other to ensure the continuity of the pipeline itself.

In the past, this junction operation was carried out by divers, who stayed for long periods in chambers of saturation plants immersed in an air consisting of oxygen and helium at a pressure equal to the pressure at the bed of the body of water. These chambers were transported by ships and were connected to diving bells, which transferred the divers from the surface of the body of water to the bed of the body of water and vice versa to allow the divers to carry out the operations of joining the two portions of pipeline.

The use of divers to carry out such junction operations was extremely time and cost consuming and put the health of the divers at risk. Further drawbacks were related to the lack of repeatability of the junction operations carried out by divers, and in general to the poor reliability and precision of the junction of the two pipelines.

In recent decades, the installation of underwater facilities and underwater pipelines deeper and deeper in the body of water has led, as an alternative to the use of divers, to the use of unmanned underwater vehicles of the ROV (Remotely Operated Vehicle) or AUV (Autonomous Underwater Vehicle) type and of junction tools operatively connected to these vehicles.

According to the prior art, in order to allow said junction operations to be carried out through the use of unmanned underwater vehicles and the respective junction tools, it is necessary that the end of each portion of the pipeline to be joined is provided with a respective flange designed to be operated by said junction tools.

However, underwater pipelines installed in the past are still configured to be operated by divers. Typically, the end portions of said pipelines are provided with flanges designed to allow junction operations by divers and, consequently, are not suitable to be operated by the currently known junction tools.

Accordingly, in order to reconfigure the pipelines installed in the past, each pipeline to be reconfigured is joined to a pipe section provided at one end of a flange designed to be operated by unmanned underwater vehicles and the respective junction tools.

GB 2,323,907 describes an apparatus for connecting underwater pipelines comprising respective end portions provided with flanges designed to be operated by divers.

However, the operations carried out by the apparatus of GB 2,323,907 require considerable spaces and dimensions around the flanges of the pipelines to be connected.

In addition, the apparatus of GB 2,323,907 requires a bearing base and is configured to operate with wide tolerances and join the flanges of the pipelines through a deformation of the flanges themselves.

Documents GB 2027157, EP 0146316 and DE 3726083 refer to further examples of apparatuses for joining pipes underwater. However, the apparatuses disclosed therein are not designed to be operated by an unmanned underwater vehicle.

### Subject and Summary of the Invention

An object of the present invention is to provide an apparatus for coupling pipe sections in a body of water that is free of the drawbacks of the known art and that is particularly versatile.

In particular, it is an object of the present invention to provide an apparatus for coupling pipe sections in a body of water in a simple and economical manner.

According to the present invention, an apparatus for coupling pipe sections into a body of water is made, the apparatus comprising:
- a frame connectable to an unmanned underwater vehicle and comprising an elongated portion, which extends along a longitudinal axis and is configured to be arranged at least partially within a first pipe section, preferably so that the first pipe section is aligned with respect to the longitudinal axis;
- an alignment device, which is supported by the elongated portion of the frame and is configured to be at least partially inserted inside a second pipe section so as to align the first pipe section with the second pipe section;
- a locking device, which is supported by the elongated portion of the frame and is configured to lock the position of the first pipe section with respect to the second pipe section when the first pipe section is aligned with the second pipe section; and
- a retaining device, which is carried by the frame and comprises a plurality of movable arms configured to selectively retain/release the first pipe section.

Thanks to the present invention, through an underwater vehicle it is possible to arrange and keep aligned in a body of water a first and a second pipe section in a simple and economical manner to subsequently allow the junction of the first and the second pipe section.

In this way, it is possible to couple the first and the second pipe section even in narrow spaces and without the need to use a bearing base.

Furthermore, it is possible to retain the first pipe section around the elongated portion of the frame, during the transport of the first pipe section from the surface of the body of water to the second pipe section, and release the first pipe section after the first pipe section has been joined to the second pipe section.

In particular, the apparatus comprises a handling device, which is coupled to the elongated portion of the frame and is configured to move the alignment device and the locking device in a direction substantially parallel to the longitudinal axis.

In this way, it is possible to insert the alignment device inside the second pipe section and arrange the locking device in a specific locking position and at the same time to precisely adjust the position of the first pipe section with respect to the second pipe section.

In particular, the handling device comprises an actuator, preferably of a hydraulic type, so as to actuate the handling of the alignment device and the locking device in a simple manner.

In particular, the alignment device and the locking device are aligned along the longitudinal axis, so as to be inserted inside the first pipe section or the second pipe section during the coupling of the first pipe section with the second pipe section.

In particular, the alignment device comprises at least one expansible element, preferably made of a polymeric material, which is configured to selectively expand so as to contact an inner surface of the second pipe section when the alignment device is inserted within the second pipe section.

In this way, it is possible to align the elongated portion of the frame with the second pipe section. Accordingly, the first pipe section, which is arranged around the elongated portion of the frame, is aligned with the second pipe section.

In particular, the locking device comprises a plurality of movable gripping units, which are selectively actuatable to contact a wall of the second pipe section to lock the position of the elongated portion of the frame with respect to the second pipe section.

In this way, it is possible to lock the first pipe section with respect to the second pipe section in a specific position in order to allow the subsequent junction of the two facing ends of the first and the second pipe section.

In particular, the apparatus comprises a centering device, which is arranged at one end of the elongated portion of the frame and is shaped so as to facilitate the insertion of the alignment device within the second pipe section.

In this way, it is possible to insert the elongated portion of the frame inside the second pipe section even if the first pipe section is initially misaligned with respect to the second pipe section.

In particular, the apparatus comprises at least one floating module coupled to the frame, so as to regulate the floating of the apparatus in the body of water.

A further object of the present invention is to provide a junction system for joining pipe sections in a body of water which is free from the drawbacks of the known art.

According to the present invention, a junction system for joining pipe sections into a body of water is made, the system comprising:
- the apparatus as previously described; and
- a junction device, which is carried by the apparatus and is configured to join a first flange of the first pipe section to a second flange of the second pipe section facing the first flange when the first pipe section is aligned and locked with respect to the second pipe section.

Thanks to the junction system, it is possible to join in a body of water a first and a second pipe section in a simple and economical manner, avoiding the use of divers to carry out the junction operations.

In particular, the junction device comprises a plurality of bolted junctions, which extend from opposite bands with respect to the first and the second flange and are selectively lockable to clamp the first and the second flange together.

In this way, it is possible to allow the automated junction of ends of pipe sections provided with connection flanges suitable to be operated by divers.

In particular, the system comprises an unmanned underwater vehicle, which is configured to be operatively connected to the apparatus so as to control the position and the actuation of the apparatus in the body of water.

In this way, it is possible to transport the system in the body of water and provide the system with a power supply to carry out the coupling and junction operations of the first and the second pipe section.

A further object of the present invention is to provide a method for coupling pipe sections in a body of water which is free from the drawbacks of the known art.

According to the present invention, a method for coupling pipe sections into a body of water by means of an apparatus as previously described; the method comprising the steps of:
- arranging the elongated portion of the frame at least partially within a first pipe section, preferably so that the first pipe section is aligned with respect to the longitudinal axis;
- inserting the alignment device at least partially inside a second pipe section so that the first pipe section is aligned with the second pipe section;
- locking the position of the first pipe section with respect to the second pipe section by means of the locking device when the first pipe section is aligned with the second pipe section; and
- selectively retaining/releasing the first pipe section by means of the retaining device.

Thanks to the present method, it is possible to couple in a body of water a first and a second pipe section in an automated manner, in order to allow the subsequent junction of the two facing ends of the first and the second pipe section without the aid of divers.

### Brief Description of the Drawings

Further characteristics and advantages of the present invention will become clear from the following description of a non-limiting example of implementation, with reference to the appended Figures, wherein:
- Figure 1 is a side elevation view, with schematic parts and parts removed for clarity, of an underwater infrastructure and a junction system for joining pipe sections in a body of water made in accordance with the present invention;
- Figure 2 is a side elevation view, with schematic parts and parts removed for clarity, of a detail of the junction system of Figure 1;
- Figure 3 is a side view, with parts removed for clarity, of a junction device of the junction system of Figure 1 coupled to a first pipe section;
- Figure 4 is a side elevation view, with parts removed for clarity, of an apparatus for coupling pipe sections of the junction system of Figure 1;
- Figure 5 is a sectional view, with parts removed for clarity, along the cutting lines V-V of the apparatus of Figure 4;
- Figure 6 is a section view, with parts removed for clarity, of a detail of the apparatus of Figure 4; and
- Figures 7 and 8 are side elevation views, with schematic parts and parts removed for clarity, of an underwater infrastructure and the junction system of Figure 1 in further operational configurations.

### Detailed Description of Preferred Embodiments of the Invention

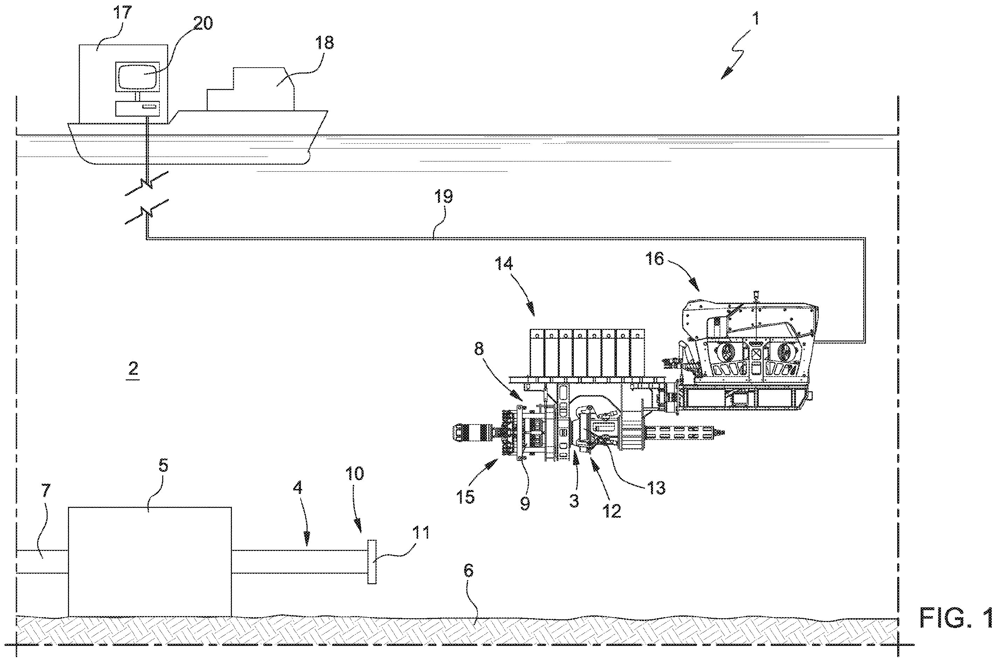

With reference to Figure 1, reference numeral 1 indicates, as a whole, a junction system for joining pipe sections in a body of water 2. In more detail, the junction system 1 is configured to join a pipe section 3 with a pipe section 4, which is part of an underwater infrastructure 5 (Figure 1).

In the case described and illustrated herein, but not limited to the present invention, the underwater infrastructure 5 is arranged on a bed 6 of the body of water 2 and the pipe section 4 constitutes an end portion of a pipeline 7 intended to convey gases and/or liquids, in particular hydrocarbons.

In particular, the pipe section 3 comprises an end 8 provided with a flange 9 and the pipe section 4 comprises a free end 10 provided with a flange 11. The flange 9 and the flange 11 are configured to be coupled to each other by fastening means, not shown in the appended Figures, so as to join the pipe section 3 to the pipe section 4. In more detail, the flange 9 and the flange 11 have respective through openings, not shown in the appended Figures, through which, in use, said fixing means are inserted so as to secure the flange 9 to the flange 11.

In addition, the pipe section 3 comprises an end 12, which is opposite to the end 8 and is provided with a flange 13. In the embodiment described and shown herein, but not limited to the present invention, the flange 13 is free of through openings and is configured to be coupled to a flange of a further pipe section, not shown in the appended Figures, by means of an automatic equipment, not shown in the appended Figures, controlled by an unmanned underwater vehicle.

It is understood that the junction system 1 made in accordance with the present invention is configured to join both the pipe sections 3 and 4, which comprise respective flanges 9, 11 and 13 of the type identified above, and further pipe sections, which are free of respective flanges or are provided with flanges of a different type from the flanges 9, 11 and 13.

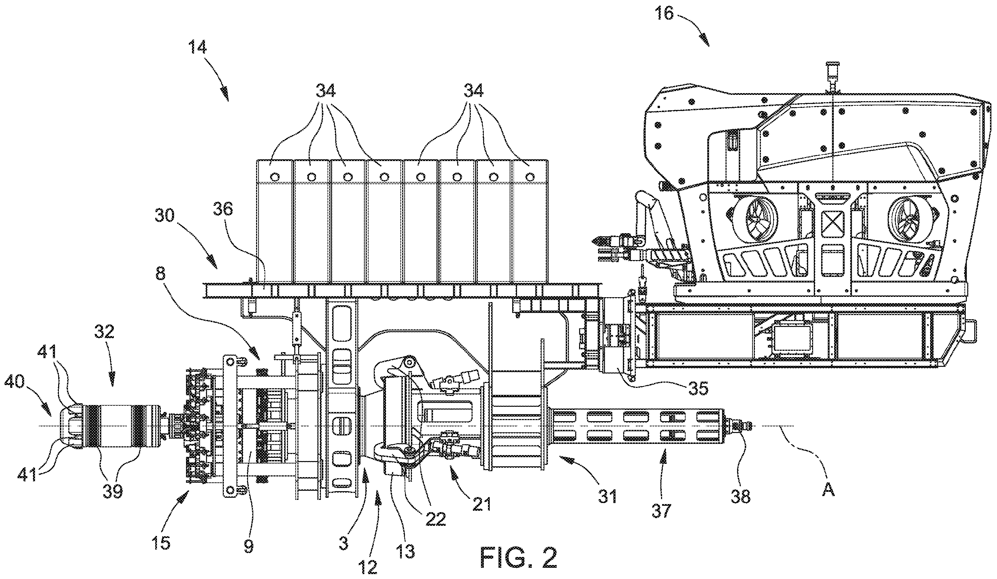

With reference to Figures 1 and 2, the junction system 1 comprises an apparatus 14 for coupling pipe sections in the body of water 2; and a junction device 15, which is carried by the apparatus 14 and is configured to join the flange 9 of the pipe section 3 to the flange 11 of the pipe section 4 facing the flange 9 when the pipe section 3 is aligned and locked with respect to the pipe section 4.

In addition, the junction system 1 comprises an unmanned underwater vehicle 16, which is configured to be operatively connected to the apparatus 14 so as to control the position and the actuation of the apparatus 14 in the body of water 2.

In the case described and illustrated herein, the underwater vehicle 16 is of the ROV type. Within the scope of the present description, the term "ROV" means a Remotely Operated Vehicle.

With reference to Figure 1, the junction system 1 comprises a surface station 17, which is preferably arranged on a support boat 18 and is connected to the underwater vehicle 16 by means of an umbilical cable 19, and a control unit 20 arranged in the surface station 17 to control the junction system 1.

The umbilical cable 19 is configured to supply electrical power to the underwater vehicle 16 and exchange signals with the underwater vehicle 16, which in turn exchanges signals with the apparatus 14 and the junction device 15.

In accordance with a variant of the present invention, not shown in the appended Figures, the underwater vehicle 16 is of the AUV type. Within the scope of the present description, the term "AUV" means an Autonomous Underwater Vehicle.

In accordance with a further variant of the present invention, not shown in the appended Figures, the junction system 1 comprises, as an alternative to the underwater vehicle 16, a lifting device, which is arranged on the surface station 17 and is configured to move the apparatus 14 and the junction device 15 in the body of water 2.

With reference to Figure 2, the apparatus 14 comprises a retaining device 21, which is carried by the apparatus 14 and comprises a plurality of movable arms 22 configured to selectively retain/release the pipe section 3.

In particular, each movable arm 22 is hydraulically actuated and is configured to retain the pipe section 3 until the pipe section 3 is joined to the pipe section 4 and to release the pipe section 3 once the pipe section 3 is joined to the pipe section 4. In more detail, each movable arm 22 is movable between a closed position, in which the movable arm 22 is gripped by the flange 13 of the end 12 of the pipe section 3, and an open position, in which the movable arm 22 is at a distance from the further flange 13 of the pipe section 3.

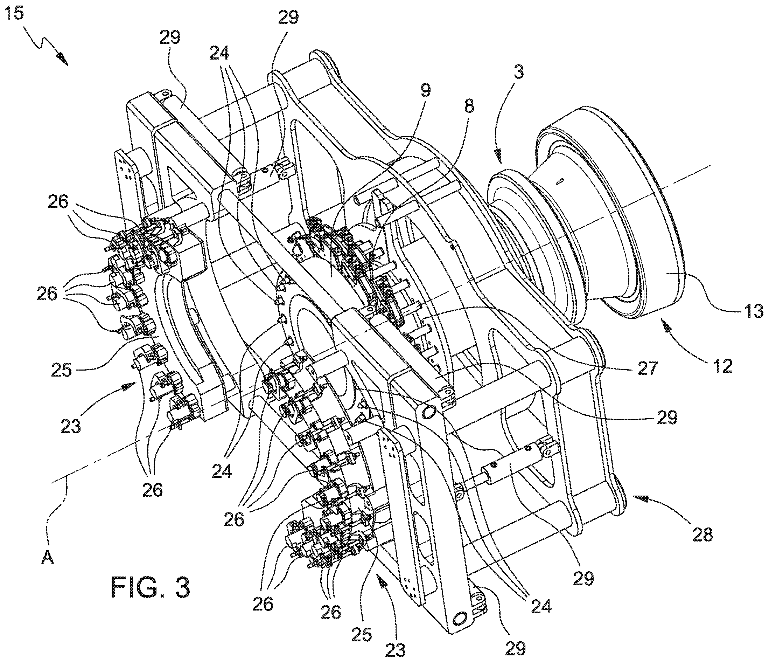

With reference to Figure 3, the junction device 15 comprises a plurality of bolted junctions 23, which are configured to extend from opposite bands with respect to the flange 9 and the flange 11 (Figure 1) and are selectively lockable so as to clamp the flange 9 and the flange 11 together.

In accordance with an embodiment, but not limited to the present invention, each bolted junction 23 comprises a respective screw 24 and a respective nut, not shown in the appended Figures.

In particular, the junction device 15 comprises two movable arms 25 configured to be closed around the free end 10 of the pipe section 4 at the flange 11 (Figure 1). Preferably, each movable arm 25 carries said nuts of the bolted junctions 23 and comprises a screwing device 26 for each bolted junction 23.

In addition, the junction device 15 comprises a plate 27 configured to be arranged around the pipe section 3 and to carry the screws 24, which in use are at least partially inserted into respective through openings of the flange 9; and an adjustment mechanism 28, which comprises a plurality of actuators 29 configured to adjust the relative position of the movable arms 25 and the plate 27 with respect to the flanges 9 and 11.

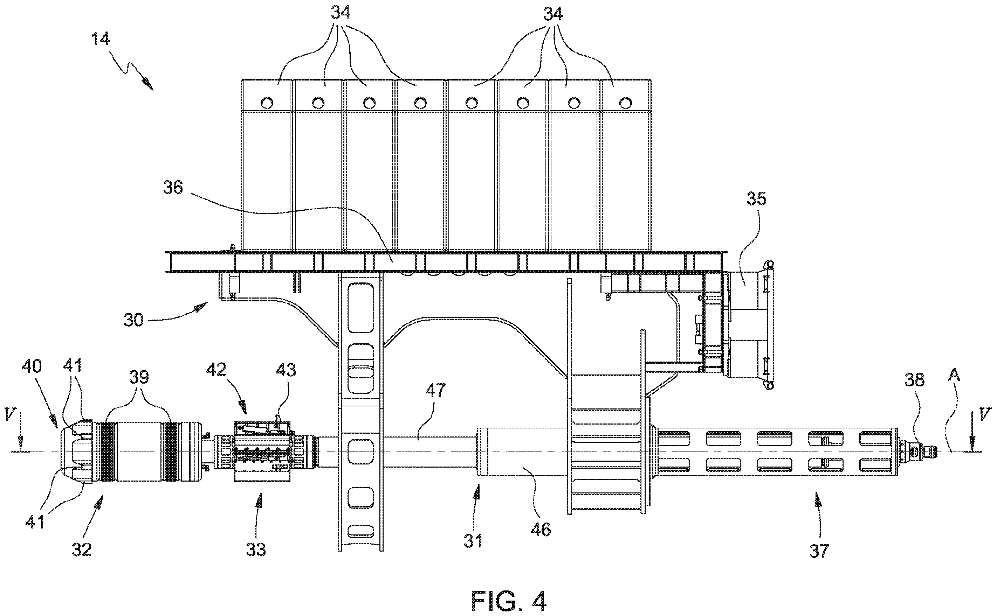

With reference to Figure 4, the apparatus 14 comprises a frame 30 connectable to the unmanned underwater vehicle 16 (Figures 1 and 2) and comprising an elongated portion 31, which extends along a longitudinal axis A and is configured to be arranged at least partially inside the pipe section 3, preferably so that the pipe section 3 is aligned with respect to the longitudinal axis A; an alignment device 32, which is supported by the elongated portion 31 of the frame 30 and is configured to be at least partially inserted within the pipe section 4 so as to align the pipe section 3 with the pipe section 4; and a locking device 33, which is supported by the elongated portion 31 of the frame 30 and is configured to lock the position of the pipe section 3 with respect to the pipe section 4 when the pipe section 3 is aligned with the pipe section 4.

In particular, the alignment device 32 and the locking device 33 are aligned along the longitudinal axis A.

In addition, the apparatus 14 comprises at least one floating module 34 coupled to the frame 30. In the case described and illustrated herein, but not limited to the present invention, the apparatus 14 comprises eight floating modules 34 arranged side by side.

In particular, the frame 30 comprises a coupling portion 35, which is configured to couple to the underwater vehicle 16; and an upper portion 36, which is configured to couple to the floating modules 34. The coupling portion 35 comprises at least one mechanical connector, not shown in the appended Figures, which is configured to mechanically connect the apparatus 14 to the underwater vehicle 16 (Figures 1 and 2); and/or at least one electrical power connector, not shown in the appended Figures, which is configured to electrically connect the apparatus 14 to the underwater vehicle 16 (Figures 1 and 2) so as to allow the transmission of electrical power from the underwater vehicle 16 (Figures 1 and 2) to the apparatus 14; and/or at least one hydraulic power connector, not shown in the appended Figures, which is configured to hydraulically connect the apparatus 14 to the underwater vehicle 16 (Figures 1 and 2) so as to allow the transmission of hydraulic power from the underwater vehicle 16 (Figures 1 and 2) to the apparatus 14; and/or at least one data exchange connector, not shown in the appended Figures, which is configured to allow the exchange of data between the underwater vehicle 16 (Figures 1 and 2) and the apparatus 14.

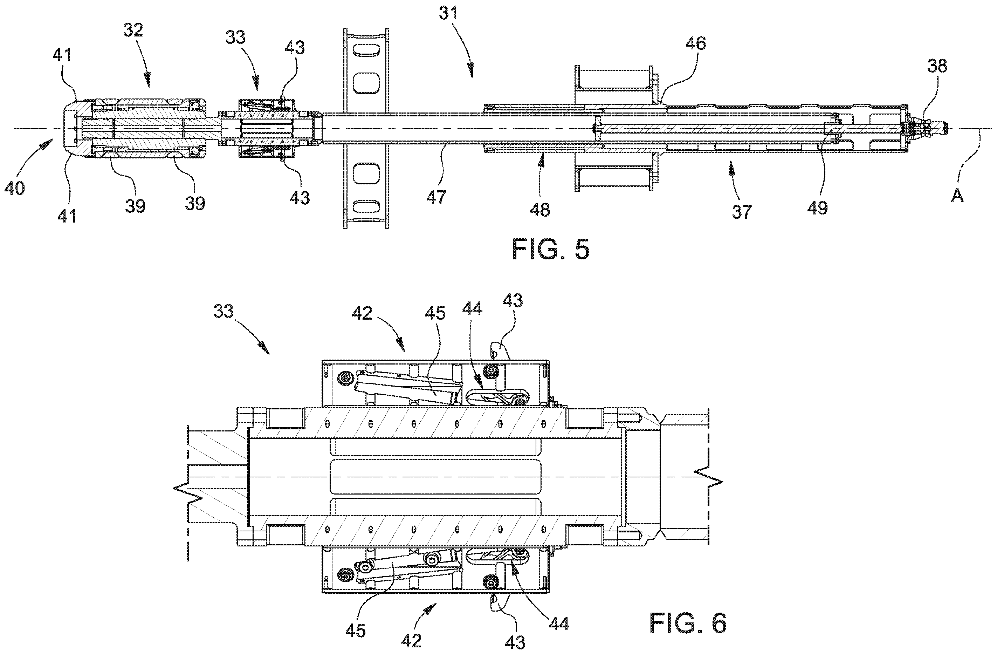

With reference to Figures 4 and 5, the apparatus 14 further comprises a handling device 37, which is coupled to the elongated portion 31 of the frame 30, is provided with an actuator 38, preferably of the hydraulic type, and is configured to move the alignment device 32 and the locking device 33 in a direction substantially parallel to the longitudinal axis A.

The alignment device 32 comprises at least one expansible element 39, preferably made of a polymeric material, which is configured to selectively expand so as to contact an inner surface of the pipe section 4 when the alignment device 32 is inserted within the pipe section 4. In the case described and illustrated herein, the alignment device 32 comprises two expansible elements 39, each of which is configured to expand radially with respect to the longitudinal axis A.

In addition, the apparatus 14 comprises a centering device 40, preferably made of polymeric material, which is arranged at one end of the elongated portion 31 of the frame 30 and is shaped so as to facilitate the insertion of the alignment device 32 within the pipe section 4. In particular, the centering device 40 is aligned with the alignment device 32 and the locking device 33 and comprises a plurality of bevelled portions 41.

With reference to Figure 4, 5 o 6, the locking device 33 comprises a plurality of movable gripping units 42, which are selectively actuatable to contact a wall of the pipe section 4 to lock the position of the elongated portion 31 of the frame 30 with respect to the pipe section 4.

In particular, each gripping unit 42 comprises a respective tooth 43, which is shaped to interfere with an outer wall of the flange 11 when the respective gripping unit 42 is actuated in the locking position.

In addition, with reference to Figure 6, each gripping unit 42 comprises a plurality of actuation mechanisms 44, each of which is provided with an actuator 45 and is configured to selectively extend/retract the respective tooth 43.

With reference to Figure 5, the elongated portion 31 of the frame 30 comprises a fixed body 46, which supports the handling device 37; and a movable body 47, which is coupled to the fixed body 46 via a telescopic joint 48 so as to slide along the fixed body 46 in a direction substantially parallel to the longitudinal axis A. In the case described and illustrated herein, the handling device 37 comprises a handling mechanism 49 of the screw-nut screw type, which is actuated by the actuator 38 and is configured to allow the sliding of the movable body 47 with respect to the fixed body 46.

In particular, the alignment device 32, the locking device 33 and the centering device 40 are supported by the mobile body 47 and, consequently, in use are moved along the longitudinal axis A thanks to the handling device 37.

In use and with reference to Figure 1, the apparatus 14 is coupled to the underwater vehicle 16 and is transported in the body of water 2 by the underwater vehicle 16. The underwater vehicle 16 and the apparatus 14 are controlled and powered by the surface station 17 via the umbilical cable 19.

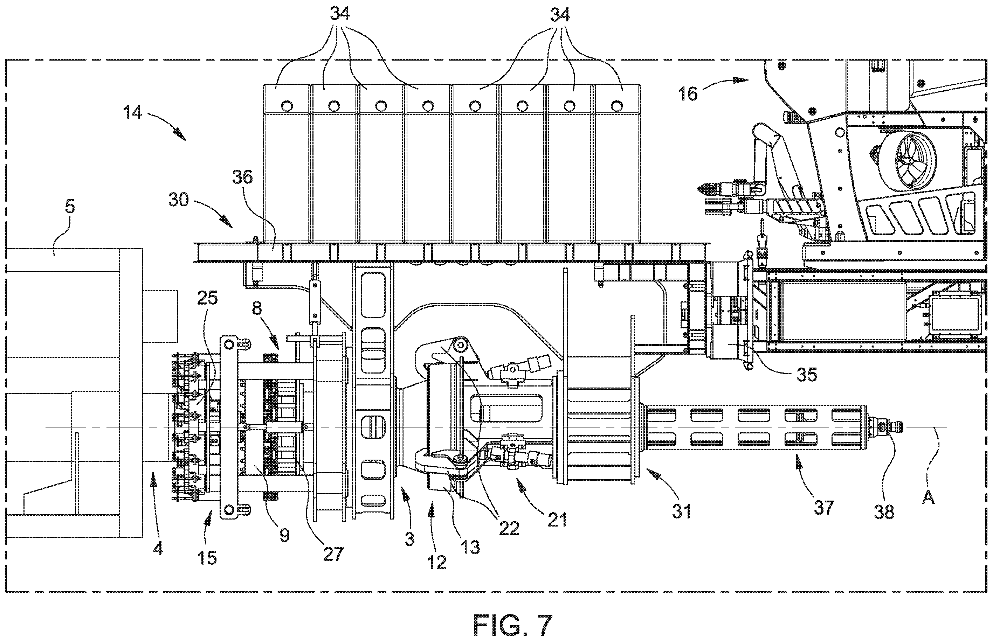

With reference to Figure 7, the underwater vehicle 16 transports the apparatus 14 near the free end 10 of the pipe section 4 so as to arrange the flange 9 of the pipe section 3 facing the flange 11 of the pipe section 4. At this point, the actuator 38 of the handling device 37 moves the movable body 47 along the longitudinal axis A so as to insert the alignment device 32 inside the pipe section 4. In this circumstance, thanks to the bevelled portions 41, the centering device 40 facilitates the insertion of the movable body 47 inside the pipe section 4. When the teeth 43 of each gripping unit 42 contact an outer wall of the flange 11, the handling device 37 stops the sliding of the movable body 47 along the fixed body 46 so as to lock the position of the pipe section 3 with respect to the pipe section 4 along the longitudinal axis A.

Subsequently, the expansible elements 39 of the alignment device 32 are expanded radially with respect to the longitudinal axis A so as to contact an inner surface of the pipe section 4, to align the pipe section 3 to the pipe section 4.

The handling device 37 causes the movable body 47 to slide again with respect to the fixed body 46. In this circumstance, since the movable body 47 is locked inside the pipe section 4, the apparatus 14 and the underwater vehicle 16 are moved towards the pipe section 4 along a direction substantially parallel to the longitudinal axis A, so as to approach the pipe section 3 to the pipe section 4.

At this point, the movable arms 25 of the junction device 15 are closed around the pipe section 4 and the actuators 29 of the adjustment mechanism 28 adjust the relative position of the movable arms 25 and the plate 27 with respect to the flanges 9 and 11. Subsequently, the junction device 15 joins the flange 9 and the flange 11 together through the clamping of the bolted junctions 23.

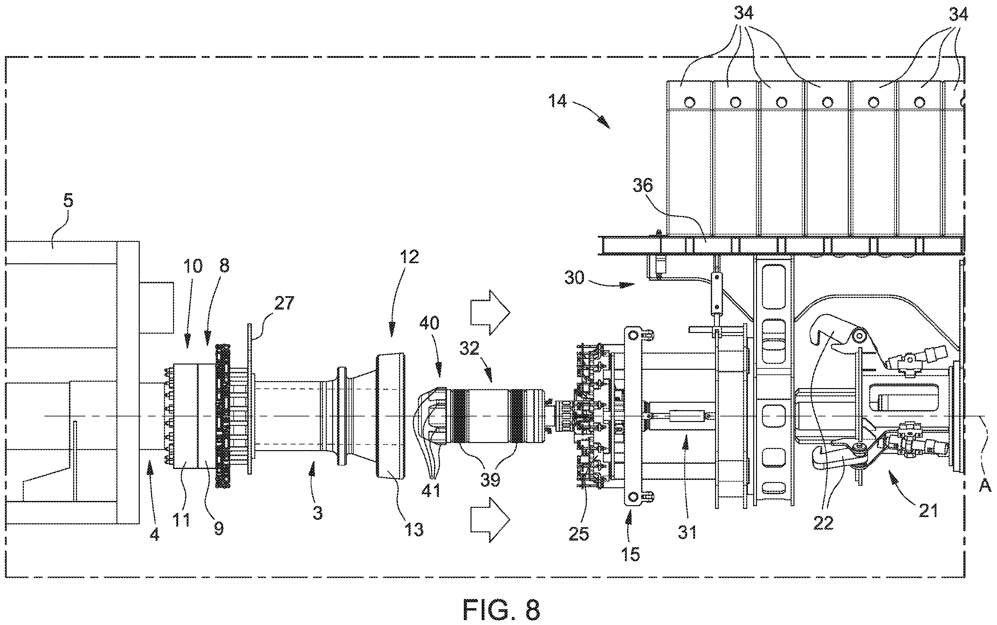

With reference to Figure 8, once the pipe section 3 and the pipe section 4 are permanently coupled, the movable arms 22 of the retaining device 21 are actuated so as to release the gripping of the flange 13 of the pipe section 3 and the movable arms 25 of the junction device 15 are open.

The gripping units 42 of the locking device 33 and the expansible elements 39 of the alignment device 32 are retracted so as to free the apparatus 14 from the pipe section 3 and the pipe section 4 and the underwater vehicle 16 moves the apparatus 14 away from the pipe section 3 and the pipe section 4.

During the junction operations of the pipe sections 3 and 4, the underwater vehicle 16 electrically and hydraulically powers the apparatus 14 and the junction device 15 and exchanges signals with the apparatus 14 and the junction device 15.

Finally, it is evident that variations can be made to the described embodiment of the present invention without departing from the scope of the following claims.

## Claims

1. An apparatus for coupling pipe sections into a body of water, the apparatus (14) comprising:
- a frame (30) connectable to an unmanned underwater vehicle (16) and comprising an elongated portion (31), which extends along a longitudinal axis (A) and is configured to be arranged at least partially within a first pipe section (3), preferably so that the first pipe section (3) is aligned with respect to the longitudinal axis (A);
- an alignment device (32), which is supported by the elongated portion (31) of the frame (30) and is configured to be at least partially inserted inside a second pipe section (4) so as to align the first pipe section (3) with the second pipe section (4);
- a locking device (33), which is supported by the elongated portion (31) of the frame (30) and is configured to lock the position of the first pipe section (3) with respect to the second pipe section (4) when the first pipe section (3) is aligned with the second pipe section (4);
**characterized in that** the apparatus further comprises a retaining device (21), which is carried by the frame (30) and comprises a plurality of movable arms (22) configured to selectively retain/release the first pipe section (3).

2. The apparatus as claimed in Claim 1, and comprising a handling device (37), which is coupled to the elongated portion (31) of the frame (30) and is configured to move the alignment device (32) and the locking device (33) in a direction substantially parallel to the longitudinal axis (A) .

3. The apparatus as claimed in Claim 2, wherein the handling device (37) comprises an actuator (38), preferably of a hydraulic type.

4. The apparatus as claimed in any one of the foregoing Claims, wherein the alignment device (32) and the locking device (33) are aligned along the longitudinal axis (A).

5. The apparatus as claimed in any one of the foregoing Claims, wherein the alignment device (32) comprises at least one expansible element (39), preferably made of a polymeric material, which is configured to selectively expand so as to contact an inner surface of the second pipe section (4) when the alignment device (32) is inserted within the second pipe section (4).

6. The apparatus as claimed in any one of the foregoing Claims, wherein the locking device (33) comprises a plurality of movable gripping units (42), which are selectively actuatable to contact a wall of the second pipe section (4) to lock the position of the elongated portion (31) of the frame (30) with respect to the second pipe section (4).

7. The apparatus as claimed in any one of the foregoing Claims, and comprising a centring device (40), which is arranged at one end of the elongated portion (31) of the frame (30) and is shaped so as to facilitate the insertion of the alignment device (32) within the second pipe section (4).

8. The apparatus as claimed in any one of the foregoing Claims, and comprising at least one floating module (34) coupled to the frame (30).

9. A junction system for joining pipe sections in a body of water, the junction system (1) comprising:
- the apparatus (14) as claimed in any one of the foregoing Claims; and
- a junction device (15), which is carried by the apparatus (14) and is configured to join a first flange (9) of the first pipe section (3) to a second flange (11) of the second pipe section (4) facing the first flange (9) when the first pipe section (3) is aligned and locked with respect to the second pipe section (4).

10. The junction system as claimed in Claim 9, wherein the junction device (15) comprises a plurality of bolted junctions (23), which are configured to extend from opposite bands with respect to the first and the second flange (9, 11) and are selectively lockable to clamp the first and the second flange (9, 11) together.

11. The junction system as claimed in Claim 9 or 10, and comprising an unmanned underwater vehicle (16), which is configured to be operatively connected to the apparatus (14) so as to control the position and the actuation of the apparatus (14) in the body of water (2).

12. A method for coupling pipe sections into a body of water by means of an apparatus (14) as claimed in any one of Claims 1 to 8; the method comprising the steps of:
- arranging the elongated portion (31) of the frame (30) at least partially within a first pipe section (3), preferably so that the first pipe section (3) is aligned with respect to the longitudinal axis (A);
- inserting the alignment device (32) at least partially inside a second pipe section (4) so that the first pipe section (3) is aligned with the second pipe section (4);
- locking the position of the first pipe section (3) with respect to the second pipe section (4) by means of the locking device (33) when the first pipe section (3) is aligned with the second pipe section (4); and
- selectively retaining/releasing the first pipe section (3) by means of the retaining device (21).

13. The method as claimed in Claim 12, and comprising the step of expanding an expansible element (39) of the alignment device (32) such that the expansible element (39) contacts an inner surface of the second pipe section (4) when the alignment device (32) is inserted within the second pipe section (4).

14. The method as claimed in Claim 12 or 13, and comprising the step of actuating a plurality of movable gripping units (42) of the locking device (33) such that said gripping units (42) contact a wall of the second pipe section (4) to lock the position of the elongated portion (31) of the frame (30) with respect to the second pipe section (4).

15. The method as claimed in any one of Claims 12 to 14, and comprising the step of joining a first flange (9) of the first pipe section (3) to a second flange (11) of the second pipe section (4) facing the first flange (9) when the first pipe section (3) is aligned and locked with respect to the second pipe section (4).

## Patentansprüche

1. Einrichtung zum Koppeln von Rohrabschnitten in einem Gewässer, wobei die Einrichtung (14) Folgendes umfasst:
- einen Rahmen (30), der mit einem unbemannten Unterwasserfahrzeug (16) verbindbar ist und einen länglichen Teil (31) umfasst, der sich entlang einer Längsachse (A) erstreckt und so ausgestaltet ist, dass er zumindest teilweise innerhalb eines ersten Rohrabschnitts (3) angeordnet ist, vorzugsweise so, dass der erste Rohrabschnitt (3) in Bezug auf die Längsachse (A) ausgerichtet ist;
- eine Ausrichtungsvorrichtung (32), die von dem länglichen Teil (31) des Rahmens (30) gestützt wird und so ausgestaltet ist, dass sie zumindest teilweise in einen Rohrabschnitt (4) eingesetzt ist, sodass der erste Rohrabschnitt (3) mit dem zweiten Rohrabschnitt (4) ausgerichtet wird;
- eine Sperrvorrichtung (33), die von dem länglichen Teil (31) des Rahmens (30) gestützt wird und so ausgestaltet ist, dass sie die Position des ersten Rohrabschnitts (3) in Bezug auf den zweiten Rohrabschnitt (4) sperrt, wenn der erste Rohrabschnitt (3) mit dem zweiten Rohrabschnitt (4) ausgerichtet ist; **dadurch gekennzeichnet, dass** die Einrichtung ferner eine Haltevorrichtung (21) umfasst, die von dem Rahmen (30) getragen wird und eine Vielzahl von beweglichen Armen (22) umfasst, die so ausgestaltet sind, dass sie den ersten Rohrabschnitt (3) selektiv festhalten/freigeben.

2. Einrichtung nach Anspruch 1, und umfassend eine Handhabungsvorrichtung (37), die mit dem länglichen Abschnitt (31) des Rahmens (30) gekoppelt ist und so ausgestaltet ist, dass sie die Ausrichtungsvorrichtung (32) und die Sperrvorrichtung (33) in einer Richtung im Wesentlichen parallel zu der Längsachse (A) bewegt.

3. Einrichtung nach Anspruch 2, wobei die Handhabungsvorrichtung (37) einen Aktuator (38), vorzugsweise vom hydraulischen Typ, umfasst.

4. Einrichtung nach einem beliebigen der vorhergehenden Ansprüche, wobei die Ausrichtungsvorrichtung (32) und die Sperrvorrichtung (33) entlang der Längsachse (A) ausgerichtet sind.

5. Einrichtung nach einem beliebigen der vorhergehenden Ansprüche, wobei die Ausrichtungsvorrichtung (32) mindestens ein dehnbares Element (39), vorzugsweise aus einem Polymermaterial hergestellt, umfasst, das so ausgestaltet ist, dass es sich selektiv dehnt, sodass es eine Innenoberfläche des zweiten Rohrabschnitts (4) berührt, wenn die Ausrichtungsvorrichtung (32) in den zweiten Rohrabschnitt (4) eingesetzt ist.

6. Einrichtung nach einem beliebigen der vorhergehenden Ansprüche, wobei die Sperrvorrichtung (33) eine Vielzahl von beweglichen Greifeinheiten (42) umfasst, die so selektiv betätigbar sind, dass sie eine Wand des zweiten Rohrabschnitts (4) berühren, sodass die Position des länglichen Teils (31) des Rahmens (30) in Bezug auf den zweiten Rohrabschnitt (4) gesperrt ist.

7. Einrichtung nach einem beliebigen der vorhergehenden Ansprüche, und umfassend eine Zentriervorrichtung (40), die an einem Ende des länglichen Abschnitts (31) des Rahmens (30) angeordnet ist und so geformt ist, dass sie das Einsetzen der Ausrichtungsvorrichtung (32) in den zweiten Rohrabschnitt (4) ermöglicht.

8. Einrichtung nach einem beliebigen der vorhergehenden Ansprüche, und umfassend mindestens ein Schwimmmodul (34), das mit dem Rahmen (30) gekoppelt ist.

9. Verbindungssystem zum Verbinden von Rohrabschnitten in einem Gewässer, wobei das Verbindungssystem (1) Folgendes umfasst:
- die Einrichtung (14) nach einem beliebigen der vorhergehenden Ansprüche; und
- eine Verbindungsvorrichtung (15), die von der Einrichtung (14) getragen wird und so ausgestaltet ist, dass sie einen ersten Flansch (9) des ersten Rohrabschnitts (3) mit einem zweiten Flansch (11) des zweiten Rohrabschnitts (4), der dem ersten Flansch (9) zugewandt ist, verbindet, wenn der erste Rohrabschnitt (3) in Bezug auf den zweiten Rohrabschnitt (4) ausgerichtet und gesperrt ist.

10. Verbindungssystem nach Anspruch 9, wobei die Verbindungsvorrichtung (15) eine Vielzahl von Schraubverbindungsstellen (23) umfasst, die so ausgestaltet sind, dass sie sich von gegenüberliegenden Seiten in Bezug auf den ersten und den zweiten Flansch (9, 11) erstrecken und selektiv verriegelbar sind, sodass der erste und der zweite Flansch (9, 11) zusammengeklemmt werden.

11. Verbindungssystem nach Anspruch 9 oder 10, und umfassend ein unbemanntes Unterwasserfahrzeug (16), das so ausgestaltet ist, dass es betriebsfähig mit der Einrichtung (14) verbunden ist, sodass es die Position und die Betätigung der Einrichtung (14) in dem Gewässer (2) steuert.

12. Verfahren zum Koppeln von Rohrabschnitten in einem Gewässer mittels einer Einrichtung (14) nach einem beliebigen der Ansprüche 1 bis 8; wobei das Verfahren die folgenden Schritte umfasst:
- Anordnen des länglichen Teils (31) des Rahmens (30) zumindest teilweise innerhalb eines ersten Rohrabschnitts (3), vorzugsweise so, dass der erste Rohrabschnitt (3) in Bezug auf die Längsachse (A) ausgerichtet ist;
- Einsetzen der Ausrichtungsvorrichtung (32) zumindest teilweise in einen zweiten Rohrabschnitt (4), sodass der erste Rohrabschnitt (3) mit dem zweiten Rohrabschnitt (4) ausgerichtet wird;
- Sperren der Position des ersten Rohrabschnitts (3) in Bezug auf den zweiten Rohrabschnitt (4) mittels der Sperrvorrichtung (33), wenn der erste Rohrabschnitt (3) mit dem zweiten Rohrabschnitt (4) ausgerichtet ist; und
- selektives Festhalten/Freigeben des ersten Rohrabschnitts (3) mittels der Haltevorrichtung (21).

13. Verfahren nach Anspruch 12, und umfassend den Schritt des Dehnens eines dehnbaren Elements (39) der Ausrichtungsvorrichtung (32), sodass das dehnbare Element (39) eine Innenoberfläche des zweiten Rohrabschnitts (4) berührt, wenn die Ausrichtungsvorrichtung (32) in den zweiten Rohrabschnitt (4) eingesetzt ist.

14. Verfahren nach Anspruch 12 oder 13, und umfassend den Schritt des Betätigens einer Vielzahl von beweglichen Greifeinheiten (42) der Sperrvorrichtung (33), sodass die Greifeinheiten (42) eine Wand des zweiten Rohrabschnitts (4) berühren, um die Position des länglichen Abschnitts (31) des Rahmens (30) in Bezug auf den zweiten Rohrabschnitt (4) zu sperren.

15. Verfahren nach einem beliebigen der Ansprüche 12 bis 14, und umfassend den Schritt des Verbindens eines ersten Flanschs (9) des ersten Rohrabschnitts (3) mit einem zweiten Flansch (11) des zweiten Rohrabschnitts (4), der dem ersten Flansch (9) zugewandt ist, wenn der erste Rohrabschnitt (3) in Bezug auf den zweiten Rohrabschnitt (4) ausgerichtet und gesperrt ist.

## Revendications

1. Appareil pour l'accouplement de sections de tuyau dans une masse d'eau, l'appareil (14) comprenant :
- un cadre (30) pouvant être relié à un véhicule sous-marin sans pilote (16) et comprenant une partie allongée (31), qui s'étend le long d'un axe longitudinal (A) et est configurée pour être agencée au moins partiellement au sein d'une première section de tuyau (3), de préférence de sorte que la première section de tuyau (3) soit alignée par rapport à l'axe longitudinal (A) ;
- un dispositif d'alignement (32), qui est supporté par la partie allongée (31) du cadre (30) et est configuré pour être au moins partiellement inséré à l'intérieur d'une seconde section de tuyau (4) de manière à aligner la première section de tuyau (3) avec la seconde section de tuyau (4) ;
- un dispositif de verrouillage (33), qui est supporté par la partie allongée (31) du cadre (30) et est configuré pour verrouiller la position de la première section de tuyau (3) par rapport à la seconde section de tuyau (4) lorsque la première section de tuyau (3) est alignée avec la seconde section de tuyau (4) ;
**caractérisé en ce que** l'appareil comprend en outre un dispositif de retenue (21), qui est porté par le cadre
(30) et comprend une pluralité de bras mobiles (22) configurés pour retenir/libérer sélectivement la première section de tuyau (3).

2. Appareil selon la revendication 1, et comprenant un dispositif de manipulation (37), qui est accouplé à la partie allongée (31) du cadre (30) et est configuré pour déplacer le dispositif d'alignement (32) et le dispositif de verrouillage (33) dans une direction sensiblement parallèle à l'axe longitudinal (A).

3. Appareil selon la revendication 2, dans lequel le dispositif de manipulation (37) comprend un actionneur (38), de préférence d'un type hydraulique.

4. Appareil selon l'une quelconque des revendications précédentes, dans lequel le dispositif d'alignement (32) et le dispositif de verrouillage (33) sont alignés le long de l'axe longitudinal (A).

5. Appareil selon l'une quelconque des revendications précédentes, dans lequel le dispositif d'alignement (32) comprend au moins un élément dilatable (39), de préférence composé d'un matériau polymère, qui est configuré pour se dilater sélectivement de manière à entrer en contact avec une surface interne de la seconde section de tuyau (4) lorsque le dispositif d'alignement (32) est inséré au sein de la seconde section de tuyau (4).

6. Appareil selon l'une quelconque des revendications précédentes, dans lequel le dispositif de verrouillage (33) comprend une pluralité d'unités de préhension mobiles (42), qui peuvent être sélectivement actionnées pour entrer en contact avec une paroi de la seconde section de tuyau (4) pour verrouiller la position de la partie allongée (31) du cadre (30) par rapport à la seconde section de tuyau (4).

7. Appareil selon l'une quelconque des revendications précédentes, et comprenant un dispositif de centrage (40), qui est agencé au niveau d'une extrémité de la partie allongée (31) du cadre (30) et est formé de manière à faciliter l'insertion du dispositif d'alignement (32) au sein de la seconde section de tuyau (4).

8. Appareil selon l'une quelconque des revendications précédentes, et comprenant au moins un module flottant (34) accouplé au cadre (30).

9. Système de jonction pour la jonction de sections de tuyau dans une masse d'eau, le système de jonction (1) comprenant :
- l'appareil (14) selon l'une quelconque des revendications précédentes ; et
- un dispositif de jonction (15), qui est porté par l'appareil (14) et est configuré pour joindre une première bride (9) de la première section de tuyau (3) à une seconde bride (11) de la seconde section de tuyau (4) orientée vers la première bride (9) lorsque la première section de tuyau (3) est alignée et verrouillée par rapport à la seconde section de tuyau (4).

10. Système de jonction selon la revendication 9, dans lequel le dispositif de jonction (15) comprend une pluralité de jonctions boulonnées (23), qui sont configurées pour s'étendre à partir de bandes opposées par rapport aux première et seconde brides (9, 11) et peuvent être verrouillées sélectivement pour serrer ensemble les première et seconde brides (9, 11).

11. Système de jonction selon la revendication 9 ou 10, et comprenant un véhicule sous-marin sans pilote (16), qui est configuré pour être opérationnellement relié à l'appareil (14) de manière à commander la position et l'actionnement de l'appareil (14) dans la masse d'eau (2).

12. Méthode d'accouplement de sections de tuyau dans une masse d'eau au moyen d'un appareil (14) selon l'une quelconque des revendications 1 à 8 ; la méthode comprenant les étapes suivantes :
- l'agencement de la partie allongée (31) du cadre (30) au moins partiellement au sein d'une première section de tuyau (3), de préférence de sorte que la première section de tuyau (3) soit alignée par rapport à l'axe longitudinal (A) ;
- l'insertion du dispositif d'alignement (32) au moins partiellement à l'intérieur d'une seconde section de tuyau (4) de sorte que la première section de tuyau (3) soit alignée avec la seconde section de tuyau (4) ;
- le verrouillage de la position de la première section de tuyau (3) par rapport à la seconde section de tuyau (4) au moyen du dispositif de verrouillage (33) lorsque la première section de tuyau (3) est alignée avec la seconde section de tuyau (4) ; et
- le maintien/la libération sélective de la première section de tuyau (3) au moyen du dispositif de retenue (21).

13. Méthode selon la revendication 12, et comprenant l'étape de dilatation d'un élément dilatable (39) du dispositif d'alignement (32) de sorte que l'élément dilatable (39) entre en contact avec une surface interne de la seconde section de tuyau (4) lorsque le dispositif d'alignement (32) est inséré au sein de la seconde section de tuyau (4).

14. Méthode selon la revendication 12 ou 13, et comprenant l'étape d'actionnement d'une pluralité d'unités de préhension mobiles (42) du dispositif de verrouillage (33) de sorte que lesdites unités de préhension (42) entrent en contact avec une paroi de la seconde section de tuyau (4) pour verrouiller la position de la partie allongée (31) du cadre (30) par rapport à la seconde section de tuyau (4).

15. Méthode selon l'une quelconque des revendications 12 à 14, et comprenant l'étape de jonction d'une première bride (9) de la première section de tuyau (3) à une seconde bride (11) de la seconde section de tuyau (4) orientée vers la première bride (9) lorsque la première section de tuyau (3) est alignée et verrouillée par rapport à la seconde section de tuyau (4).
